# EUROPÄISCHE PATENTSCHRIFT

(11) **EP 1 503 922 B1**
(45) Veröffentlichungstag und Bekanntmachung des Hinweises auf die Patenterteilung: **05.07.2006**
(21) Anmeldenummer: 03725133.7
(22) Anmeldetag: 02.05.2003
(51) Int. Cl.: B60R 21/01

(54) **VERFAHREN ZUR AUSLÖSUNG EINER SICHERHEITSEINRICHTUNG IN EINEM KRAFTFAHRZEUG BEI EINEM ÜBERROLLVORGANG**
METHOD FOR RELEASING A SAFETY DEVICE IN A MOTOR VEHICLE IN THE EVENT OF AN OVERTURN
PROCEDE PERMETTANT DE DECLENCHER UN DISPOSITIF DE SECURITE D'UN VEHICULE AUTOMOBILE EN CAS DE TONNEAUX

(30) Priorität: 15.05.2002 DE 10221466
(43) Veröffentlichungstag der Anmeldung: 09.02.2005
(73) Patentinhaber: Conti Temic microelectronic GmbH, 90411 Nürnberg (DE)
(72) Erfinder: KÜBLBECK, Hermann, 86529 Schrobenhausen (DE); LARICE, Markus, 85123 Karlskron (DE); STEURER, Helmut, 85302 Gerolsbach-Junkenhofen (DE)
(86) Internationale Anmeldenummer: PCT/EP2003/004607
(87) Internationale Veröffentlichungsnummer: WO 2003/097413

(56) Entgegenhaltungen:
- EP-A- 0 430 813
- DE-A- 10 025 259
- DE-A- 10 025 260
- DE-A- 10 112 315
- DE-A- 19 744 083
- DE-A- 19 905 193

## Beschreibung

Die Erfindung betrifft ein Verfahren zur Auslösung einer Sicherheitseinrichtung in einem Kraftfahrzeug bei einem Überrollvorgang, bei dem die von einem Drehratensensor erzeugten Drehratensignale zur Erkennung eines Überschlages des Kraftfahrzeuges um einer seiner Achsen bewertet werden. Als Sicherheitseinrichtungen kommen dabei vornehmlich Überschlagbügel, Sideairbags und Gurtstraffer in Frage.

Zur Erkennung eines Überschlages eines Kraftfahrzeuges, z. Bsp. hinsichtlich seiner Längsachse (x-Achse) ist es bekannt, hierzu die von einem Drehratensensor (Gyrosensor) erzeugten Drehratensignale auszuwerten. Ein entsprechendes Auswerteverfahren ist bspw. aus der DE 100 25 259 A1 , die als nächstliegender Stand der Technik betrachtet wird, bekannt, bei dem von einer theoretischen, an das jeweilige Fahrzeug angepaßten Überschlag-Kennlinie in der Form eines ω-α-Graphen ausgegangen wird. Dieser ω-α-Graph wird durch Tiefpassfilterfunktionen mit bestimmten, jeweils an die zu detektierenden Überschlagszenarien angepassten Grenzfrequenzen und Auslöseschwellen approximiert. Die Drehratensignale werden von diesen Tiefpassfilterfunktionen verarbeitet und bewertet; um gegebenenfalls eine Auslösung einer Sicherheitseinrichtung herbeizuführen. Nachteilig bei diesem bekannten Verfahren ist jedoch, daß zum Erstellen und zur Anpassung dieses Auslösealgorithmus an einen speziellen Fahrzeugtyp umfangreiches Datenmaterial vorliegen muß.

Ein anderes Verfahren zur Detektion von Überrollvorgängen ist aus der DE 100 25 260 A1 bekannt, bei dem zur Berechnung des aktuellen Neigungswinkels des Fahrzeuges dem von einem Inertiallagesensor erzeugten anfänglichen Neigungswinkel des Fahrzeuges der Wert des integrierten Drehratensignales hinzuaddiert wird und dieser berechnete aktuelle Neigungswinkel mit einem Schwellwert verglichen wird, wobei dieser Schwellwert in Abhängigkeit des Drehratensignales und in einer an den jeweiligen Fahrzeugtyp angepaßten Form erzeugt wird. Dieses Verfahren erfordert in nachteiliger Weise die Verwendung eines Neigungssensors zur Feststellung der anfänglichen Neigung des Fahrzeuges.

Weitere solcher Auswerteverfahren sind aus der DE 199 05 193 und DE 199 05 379 bekannt, die die Auswertung der Drehratensignale über zwei unabhängige Kanäle vorsehen, nämlich einerseits durch Auswertung der differenzierten Drehratensignale und durch Auswertung der integrierten Drehratensignale andererseits. Bei der zuletzt genannten Auswertung werden die integrierten Drehratensignale mit einem in Abhängigkeit von der Drehrate erzeugten Schwellwert verglichen. Ob ein Wertepaar, bestehend aus einem integrierten Drehratensignal und der zugehörigen Drehrate, als zu einem Überschlag führenden Fahrzeugzustand bewertet wird, entscheidet sich anhand einer vorgegebenen fahrzeugspezifischen Überschlag-Kennlinie, die die vorkommenden Wertepaare in No-Fire-Gebiete (keine Auslösung einer Sicherheitseinrichtung) und Fire-Gebiete (Auslösung einer Sicherheitseinrichtung) unterteilt.

Die in DE 196 09 717 A1 und DE 197 44 083 A1 beschriebenen Verfahren leiten aus den in allen drei Achsen eines Fahrzeuges gemessenen Drehraten durch Integration die entsprechenden Kardanwinkel ab, um daraus die Lage eines in eine horizontale Ebene projizierten Fahrzeugschwerpunktes zu bestimmen und ein Überrollen des Fahrzeuges zu signalisieren, wenn der projizierte Schwerpunkt die Grenzen einer ebenfalls in die horizontale Ebene projizierten fahrzeugfesten Fläche überschreitet. Ferner wird bei diesem bekannten Verfahren die Rotationsenergie des Fahrzeuges aus den Drehraten abgeleitet, um einen Überschlag dann zu erkennen, wenn die Rotationsenergie eine bestimmte Schwelle überschreitet, die bspw. diejenige potentielle Energie sein kann, die erforderlich ist, um das Fahrzeug aus seiner momentanen Lage in eine Lage zu kippen, in der der Schwerpunkt seinen gegenüber der Fahrbahnebene maximalen Abstand erreicht.

Die Aufgabe der Erfindung besteht darin, ein Verfahren zur Auslösung einer Sicherheitseinrichtung anzugeben, das zur Realisierung wenig Datenmaterial erfordert und mit dem gleichzeitig Überschläge rechtzeitig und zuverlässig erkennbar sind.

Diese Aufgabe wird durch die Merkmale des Patentanspruchs 1 gelöst. Hiernach werden die von einem Drehratensensor erzeugten Drehratensignale hinsichtlich einer Drehachse sowohl mittels eines Tiefpassfilters mit einer Grenzfrequenz, bei der die für einen Überrollvorgang charakteristischen Signalanteile des Drehratensignales dieses Tiefpassfilter ungefiltert passieren, tiefpassgefiltert, als auch zur Erzeugung eines von der Drehrate des Fahrzeuges abhängigen Integralwertes, wobei dann ein Auslösesignal zur Auslösung einer Sicherheitseinrichtung erzeugt wird, wenn das tiefpassgefilterte Drehratensignal einen einstellbaren Auslöseschwellwert überschreitet, der in Abhängigkeit des Integralwertes erzeugt wird. Vorzugsweise wird die Grenzfrequenz des verwendeten Tiefpassfilters derart gewählt, daß schnelle Überschläge rechtzeitig und sicher erkannt werden. Die Grenzfrequenz liegt dabei bei einigen Hz. Dies wird in vorteilhafter Weise dadurch erreicht, daß durch entsprechende Einstellung der Grenzfrequenz des verwendeten Tiefpassfilters und die Einstellung des Auslöseschwellwertes in Abhängigkeit des integrierten Drehratensignales eine auf das Fahrzeug angepasste Überschlag-Kennlinie derart realisierbar ist, daß die in Frage kommenden Wertepaare für die tiefpassgefilterten und die integrierten Drehratensignale in No-Fire-Gebiete und Fire-Gebiete nahezu eindeutig klassifizierbar sind.

Gemäß einer vorteilhaften Weiterbildung der Erfindung werden neben der Drehrate des Fahrzeuges weitere, die Stabilität anzeigende fahrzustandsspezifische Parameter, insbesondere die Vertikalbeschleunigung, Lateralbeschleunigung oder die Neigung des Fahrzeuges mittels Sensoren erfaßt, und in Abhängigkeit wenigstens einer dieser Parameter der Wert des Auslöseschwellwertes an den durch diesen Parameter angezeigten Stabilitätszustand des Fahrzeuges angepaßt. Wird beispielsweise die Querbeschleunigung als Parameter verwendet, so soll bei einem hohen Beschleunigungswert die Auslösung früher erfolgen, als bei niedriger Querbeschleunigung des Fahrzeuges, welches hinsichtlich der Überschlag-Kennlinie eine Verschiebung der das No-Fire-Gebiet von dem Fire-Gebiet trennenden Kennlinie bedeutet. Das Verfahren wird somit hinsichtlich der Querbeschleunigung empfindlicher. Soll dagegen die Vertikalbeschleunigung des Fahrzeuges als Parameter verwendet werden, so soll die Überschlag-Kennlinie ebenfalls zu kleineren Werten hin verschoben werden, wenn der Beschleunigungswert wesentlich von dem Wert 1 g abweicht, also einen Zustand anzeigt, der in Richtung Schwerelosigkeit geht.

Eine weitere vorteilhafte Ausbildung der Erfindung besteht darin;-ein weiteres Tiefpassfilter zur Filterung des Drehratensignales vorzusehen, wobei dessen Grenzfrequenz derart eingestellt wird, daß die für einen langsamen Überrollvorgang charakteristischen Signalanteile des Drehratensignales ungefiltert dieses weitere Tiefpassfilter passieren und anschließend erst dann mit einem festen Auslöseschwellwert verglichen werden, wenn das integrierte Drehratensignal einen festen Winkelschwellwert erreicht. Da dieses integrierte Drehratensignal ungefähr dem Neigungswinkel des Fahrzeuges entspricht, stellt dieser Winkelschwellwert einen Mindestneigungswinkel dar. Erst wenn dieser Mindestneigungswinkel erreicht wird, erfolgt ein Vergleich des gefilterten Drehratensignals mit dem festen Schwellwert, der vorzugsweise eine Mindestdrehrate darstellt. Damit ist eine Auslösung einer Sicherheitseinrichtung auch bei langsamen Überschlägen - spätestens wenn das Fahrzeug auf der Seite liegt - sichergestellt.

Zur Verbesserung der Auslösesicherheit bei allen auftretenden Überschlagszenarien kann eine dritte Tiefpassfilterung des Drehratensignales durchgeführt werden, wobei die Grenzfrequenz des verwendeten Tiefpassfilters zwischen dem Wert der Grenzfrequenz des ersten Tiefpassfilters und dem Wert der Grenzfrequenz des zweiten Tiefpassfilters liegt.

Zur weiteren Verbesserung der Auslösesicherheit können gemäß einer besonders vorteilhaften Weiterbildung der Erfindung die die Stabilität des Fahrzeuges anzeigende Sensorsignale der weiteren Sensoren zur Plausibilisierung verwendet werden, so daß eine Auslösung nur dann ermöglicht wird, wenn alle Sensorsignale tatsächlich einen drohenden Überschlag erkennen lassen. So kann vorzugsweise die Lateralbeschleunigung des Fahrzeuges nach einer Tiefpassfilterung mit einer Plausibilitätsschwelle verglichen werden, wobei eine Auslösung nur dann zugelassen wird, wenn der Betrag dieser Lateralbeschleunigung einen Mindestwert aufweist, wodurch insbesondere Überrollvorgänge im Sandbett oder mit Bordsteinanprall erfaßt werden.

Auch die Vertikalbeschleunigung des Fahrzeuges kann zur Plausibilisierung verwendet werden, indem der Auslöseschwellwert so eingestellt wird, daß eine Auslösung nur dann erfolgt, wenn die Vertikalbeschleunigung von dem Wert 1g wesentlich abweicht. Damit werden insbesondere Überrollvorgänge vom Typ Schraubrampe oder Überschläge über eine Klippe erfaßt, bei denen die Vertikalbeschleunigung Schwerelosigkeit anzeigt.

Das erfindungsgemäße Verfahren soll nachfolgend anhand von Ausführungsbeispielen im Zusammenhang mit den Zeichnungen erläutert werden. Es zeigen:
- Figur 1:: Ein Blockschaltbild zur Durchführung des erfindungsgemäßen Verfahrens,
- Figur 2:: eine Überschlag-Kennlinie in der Darstellung eines ωₓ-∫ωₓdt-Diagramms zur Erläuterung der Funktionsweise der Anordnung nach Figur 1,
- Figur 3:: eine weitere Überschlag-Kennlinie zur Erläuterung der Funktionsweise der Anordnung nach Figur 1, und
- Figur 4:: ein Blockschaltbild als weiteres Ausführungsbeispiel zur Durchführung des erfindungsgemäßen Verfahrens.

In den Figuren sind gleiche Funktionsblöcke bzw. gleichwirkende Teile mit den gleichen Bezugszeichen versehen. Dabei sind die Blockschaltbilder derart aufzufassen, daß die dargestellten Funktionsblöcke sowohl mit analogen Bauteilen als auch hinsichtlich ihrer Funktion softwaremäßig mittels eines Prozessors realisierbar sind. Im letztgenannten Fall werden die analogen Sensorsignale vor der Verarbeitung digitalisiert und digitalen Filtern, in der Regel von 1. Ordnung zur Verarbeitung zugeführt.

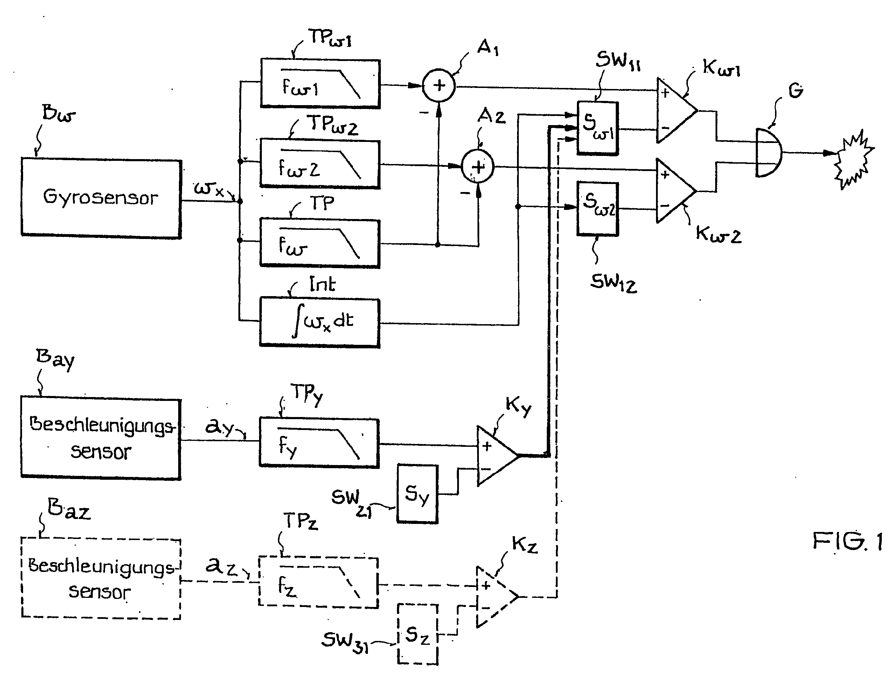

Das Blockschaltbild nach Figur 1 zeigt ein Sicherheitssystem mit einer Anordnung zur Durchführung des erfindungsgemäßen Verfahrens. Diese Anordnung besteht zunächst aus einem Drehraten- oder Gyrosensor B_{ω}, der ein zur Winkelgeschwindigkeit ωₓ (Drehrate) um die Längsachse (x-Achse) eines Fahrzeuges proportionales Drehratensignal erzeugt, das drei Tiefpassfiltern TP_{ω1}, TP_{ω2} und TP sowie zwecks Integration des Drehratensignales ωₓ einem Integrator Int zugeführt wird.

Bevor die am Ausgang der Tiefpassfilter TP_{ω1} und TP_{ω2} anstehenden tiefpassgefilterten Drehratensignale einem Schwellwertvergleich mit jeweils einem Komparator K_{ω1} bzw. K_{ω2} unterzogen werden, erfolgt eine Offset-und Offset-Drift-Korrektur, indem die von dem Tiefpass TP gefilterten Drehratensignale mittels Addierer A1 und A2 von den Ausgangssignalen der Tiefpassfilter TP_{ω1} und TP_{ω2} subtrahiert werden. Das für die Offset-und Offset-Drift-Korrektur verwendete Tiefpassfilter TP ist von 1 Ordnung mit einer Grenzfrequenz f_{ω} von ca. 10mHz.

Den schon genannten Komparatoren K_{ω1} und K_{ω2} werden über deren nicht-invertierenden Eingänge das jeweilige tiefpassgefilterte und offsetkorrigierte Drehratensignal zugeführt, während an deren invertierenden Eingängen jeweils eine Schwellwerterzeugungsschaltung SW₁₁ bzw. SW₁₂ angeschlossen ist. Zur Erzeugung eines entsprechenden Auslöseschwellwertes werden diesen Schwellwerterzeugungsschaltungen SW₁₁ und SW₁₂ das von dem Integrator Int erzeugte integrierte Drehratensignal ∫ωₓdt zugeführt.

Die Grenzfrequenz f_{ω1} des Tiefpassfilters TP_{ω1} ist so gewählt, daß die für einen schnellen Überschlag charakteristischen Signalanteile des Drehratensignales ωₓ ungefiltert dieses Tiefpassfilter passieren; die Größenordnung dieser Grenzfrequenz liegt dabei bei einigen Hz.

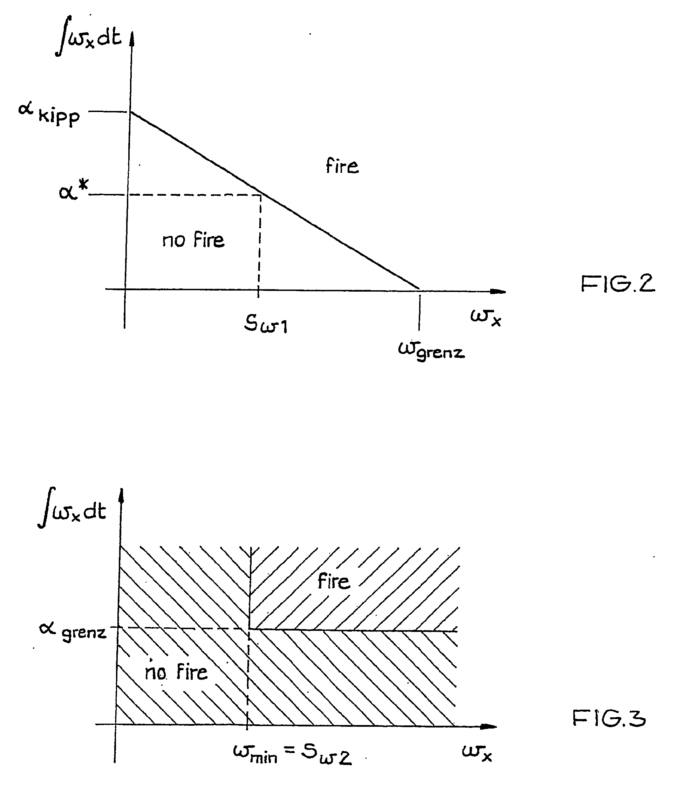

Der von dem Integrator Int erzeugte Integralwert ∫ωₓdt dient der Schwellwerterzeugungsschaltung SW₁₁ zur Erstellung eines Auslöseschwellwertes S_{ω1}, der an dem invertierenden Eingang des Komparators K_{ω1} anliegt. Zur Bestimmung dieses Auslöseschwellwertes S_{ω1} in Abhängigkeit des Integralwertes ∫ωₓdt dient eine fahrzeugspezifische Überschlag-Kennlinie, wie dies beispielhaft mit einem ωₓ-∫ωₓdt-Diagramm gemäß Figur 2 dargestellt ist. Dabei stellt ωₓ den Betrag der Drehrate, also der Drehgeschwindigkeit der bei einem drohenden Überschlag des Fahrzeuges auftretenden Wankbewegung bzgl. dessen x-Achse dar und ∫ωₓdt den Wert des integrierten Drehratensignals, der im wesentlichen dem Neigungswinkel des Fahrzeuges in y-Richtung (Querachse) entspricht.

Der ωₓ-∫ωₓdt -Graph dieses Diagramms, der entgegen der in Figur 2 gezeigten Geraden bspw. als mehrstufige Treppenfunktion realisiert sein kann, teilt die (ωₓ, ∫ωₓdt)-Wertepaare des 1. Quadranten in zwei Gebiete ein, die einerseits Fahrzustände betreffen, die zur Auslösung einer Sicherheitseinrichtung führen sollen, also Fire-Szenarien und andererseits No-Fire-Szenarien darstellen, deren (ωₓ, ∫ωₓdt)-Kombinationen nicht zur Auslösung der Sicherheitseinrichtung führen dürfen. Die (ω_{grenz},0)-Kombination bzw. (0,αₖᵢₚₚ)-Kombination stellt einen Grenzzustand eines Fahrzeuges mit einer Drehrate ω_{grenz} in x-Richtung und einem Neigungswinkel von 0° bzw. mit einer Drehrate 0 und einem Neigungswinkel (statischer Kippwinkel) αₖᵢₚₚ dar, der zu einem Überschlag führt. Diese Parameter sind fahrzeugspezifisch und müssen daher für jeden Fahrzeugtyp gesondert bestimmt werden.

Für einen bestimmten, von dem Integrator Int erzeugten ∫ωₓdt-Wert, in Figur 2 als α* bezeichnet, wird mittels des ωₓ-∫ωₓdt -Graphen nach Figur 2 der zugehörige ωₓ-Wert bestimmt, der als Auslöseschwellwert S_{ω1} dem Komparator K_{ω1} zugeführt wird. Übersteigt der von dem Tiefpassfilter TP_{ω1} erzeugte Wert diesen Auslöseschwellwert S_{ω1}, wird über ein OR-Gatter G ein Auslösesignal an eine Sicherheitseinrichtung ausgegeben.

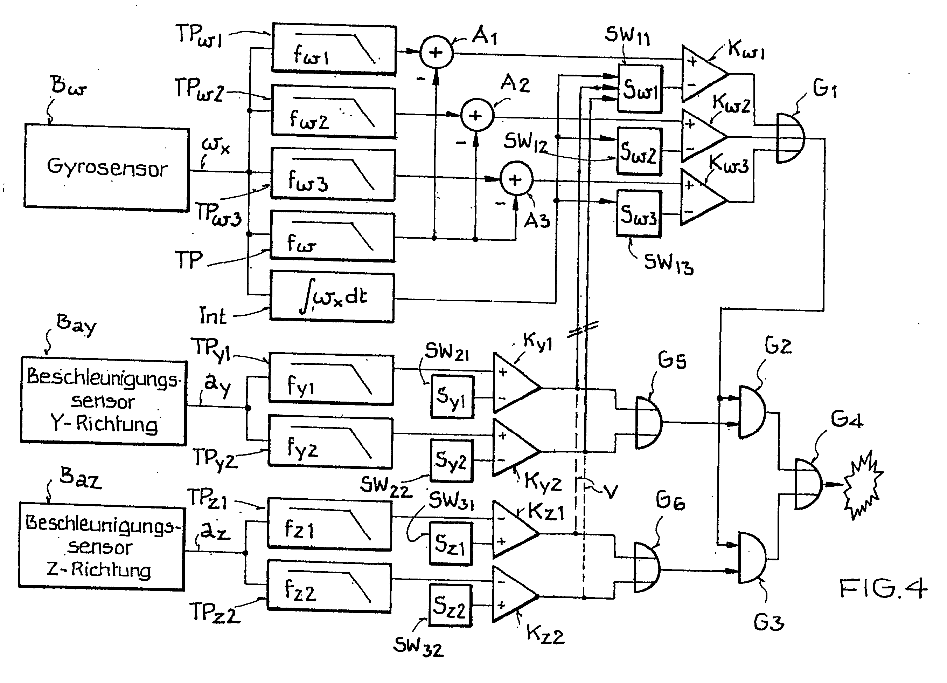

Der von der Schwellwerterzeugungsschaltung SW₁₂ an den Komparator K_{ω2} ausgegebene Auslöseschwellwert S_{ω2} wird dagegen als fester Wert vorgegeben und ergibt sich aus dem ωₓ-∫ωₓdt -Diagramm gemäß Figur 3. Hiernach soll eine Auslösung nach Erreichen einer Mindestdrehrate ωₘᵢₙ des Fahrzeuges nur dann erfolgen, wenn ein bestimmter ∫ωₓdt-Wert erzeugt wird, also das Fahrzeug einen bestimmten Mindestneigungswinkel α_{grenz} aufweist. Dabei hängt die Mindestdrehrate ωₘᵢₙ vom Frequenzinhalt des Drehratensignales ab und damit von der Grenzfrequenz des verwendefen Tiefpassfilters TP_{ω2}. Der α_{grenz}-Wert wird dabei so eingestellt, daß eine Auslösung der Sicherheitseinrichtung bei langsamen Überschlägen spätestens dann erfolgt , wenn das Fahrzeug auf der Seite liegt, jedoch eine Auslösung beim Einfahren in eine Steilwand, die iri der Regel keine 90° aufweist, unterbleibt.

Die Anordnung nach Figur 1 weist neben dem Gyrosensor B_{ω} einen weiteren, die Querbeschleunigung des Fahrzeuges erfassenden Sensor B_{ay} auf, dessen Beschleunigungssignal a_{y} zunächst einem Tiefpassfilter TP_{y} zugeführt wird, dessen Grenzfrequenz f_{y} derart eingestellt ist, um die für eine Querbeschleunigung charakteristischen Signalanteile ungefiltert zwecks Vergleich mit einem Schwellwert S_{y} dem nicht-invertierenden Eingang eines Komparators K_{y} zuzuführen, wobei der Ausgang dieses Komparators K_{y} mit der Schwellwerterzeugungsschaltung SW₁₁ verbunden ist. Der Schwellwert S_{y} wird von einer Schwellwerterzeugungsschaltung SW₂₁ an den invertierenden Eingang des Komparators K_{y} ausgegeben und entspricht einem bestimmten Betrag der Querbeschleunigung. Wird dieser Schwellwert S_{y} von dem gefilterten Beschleunigungssignal überschritten, bewirkt der dadurch ausgelöste Pegelwechsel, daß die zur Ausgabe des Auslöseschwellwertes S_{ω1} verwendete Überschlags-Kennlinie nach Figur 2 zu kleineren Werten hin verschoben wird. Damit wird die Anordnung empfindlicher hinsichtlich hoher Querbeschleunigungen des Fahrzeuges und es wird eine kürzere Reaktionszeit von dem Zeitpunkt der Detektion eines drohenden Überschlages bis zur Auslösung der Sicherheitseinrichtung sichergestellt.

Anstelle des die Querbeschleunigung messenden Beschleunigungssensors B_{ay} kann auch ein die vertikale Beschleunigung des Fahrzeuges messender Beschleunigungssensor B_{az} eingesetzt werden, dessen Signale ebenfalls mittels eines Tiefpassfilters TP_{z} gefiltert und mittels eines Komparators K_{z} mit einem von einer Schwellwerterzeugungsschaltung SW₃₁ erzeugten Schwellwert S_{z} verglichen werden, wobei bei Überschreiten dieses Schwellwertes durch das gefilterte Beschleunigungssignal der entsprechende Pegelwechsel ebenfalls der Schwellwerterzeugungsschaltung SW₁₁ zugeführt wird. Die Figur 1 zeigt diese Komponenten B_{az} , TP_{z}, K_{z} und SW₃₁ sowie die-Verbindungslinien in gestrichelter Darstellung.

Durch einen von dem Komparator K_{z} bewirkten Pegelwechsel wird die Schwellwerterzeugungsschaltung SW₁₁ ebenfalls veranlaßt, zu kleineren Werten verschobene Auslöseschwellwerte S_{ω1} auszugeben. Zur Bestimmung des von der Schwellwerterzeugungsschaltung SW₃₁ auszugebenden Schwellwertes S_{z} wird von der Überlegung ausgegangen, daß ein stabiler Fahrzeugzustand vorliegt, wenn der Wert des von dem Beschleunigungssensor B_{az} ausgegebenen Beschleunigungssignals wenigstens 1g (=Erdbeschleunigung) beträgt. Bei einem solchen Zustand ist keine Anpassung der Auslöseschwellwerte S_{ω1} erforderlich. Dagegen muß bei niedrigen a_{z}-Werten von einem weniger stabilen Fahrzustand des Fahrzeuges ausgegangen werden, mit der Folge, daß nunmehr eine Anpassung der Auslöseschwellwerte S_{ω1} derart erfolgen muß, daß bei entsprechenden ω₁-Werten eine Auslösung früher erfolgen muß als bei einer stabilen Fahrzeuglage. Bei der Festlegung der Schwellen S_{z} für die Schwellwerterzeugungsschaltung SW₃₁ müssen diese Überlegungen berücksichtigt werden.

Bei der Anordnung nach Figur 1 zur Durchführung des erfindungsgemäßen Verfahrens können natürlich gleichzeitig der Beschleunigungssensor B_{y} zur Detektion der Querbeschleunigung a_{y} als auch der Beschleunigungssensor B_{z} zur Detektion der Vertikalbeschleunigung eingesetzt werden, um eine optimale dynamische Anpassung der Auslöseschwelle S_{ω1} sicherzustellen. In diesem Fall werden die Ausgänge der beiden Komparatoren K_{y} und K_{z} getrennt über eine separate Leitung jeweils mit der Schwellwerterzeugungsschaltung SW₁₁ verbunden (in der Figur 1 durch 2 parallel gestrichelt dargestellte Linien gezeichnet).

Die Anordnung nach Figur 4 unterscheidet sich gegenüber derjenigen nach Figur 1 zunächst durch die Anzahl der für die Auswertung des von dem Drehratensensor B_{ω} ausgegebenen Drehrate ωₓ vorgesehenen Tiefpassfilter und der entsprechend nachgeschalteten Komparatoren mit zugehörigen Schwellwerterzeugungsschaltungen. Neben dem Tiefpassfilter TP_{ω1} werden weitere Tiefpassfilter TP_{ω2} und TP_{ω3} eingesetzt, wobei das Tiefpassfilter TP_{ω2} hinsichtlich seiner Funktion und Auslegung dem Tiefpassfilter TP_{ω2} aus Figur 1 entspricht, also zur Erfassung von langsamen Überschlägen vorgesehen ist. Jedem der drei Tiefpassfilter TP_{ω1}, TP_{ω2} und TP_{ω3} ist jeweils ein Komparator K_{ω1}, K_{ω2} und K_{ω3} mit zugehörigen Schwellwerterzeugungsschaltungen SW₁₁, SW₁₂ und SW₁₃ nachgeschaltet, wobei diese Schwellwerterzeugungsschaltungen jeweils einen Auslöseschwellwert S_{ω1}, S_{ω2} bzw. S_{ω3} ausgeben. Die Ausgänge der drei Komparatoren K_{ω1}, K_{ω2} und K_{ω3} sind ebenfalls auf ein OR-Gatter G₁ geführt, das seinerseits ein UND-Gatter G₂ und ein UND-Gatter G₃ mit jeweils zwei Eingängen ansteuert. Die von den Tiefpassfiltern TP_{ω1}, TP_{ω2}, und TP_{ω3} ausgegebenen Signale werden ebenfalls wie in Figur 1 gezeigt, einer Offset- und Offset-Drift-Korrektur unterworfen, indem das von dem Tiefpassfilter TP ausgegebene Signal mittels Addierern A₁ bis A₃ von diesen subtrahiert werden.

Wie schon oben beschrieben, wird die Grenzfrequenz f_{ω2} sowie der von der Schwellwerterzeugungsschaltung SW₁₂- ausgegebene Auslöseschwellwert S_{ω2} wie bei dem Tiefpassfilter TP_{ω2} bzw. der Schwellwerterzeugungsschaltung SW₁₂ gemäß Figur 1 eingestellt. Die Grenzfrequenz f_{ω3} des zusätzlichen Tiefpassfilters TP_{ω3} wird nun so eingestellt, daß dessen Wert zwischen dem Wert der Grenzfrequenz f_{ω1} des ersten Tiefpassfilters TP_{ω1} und dem Wert der Grenzfrequenz f_{ω3} des zweiten Tiefpassfilters TP_{ω2} liegt. Die von der Schwellwerterzeugungsschaltung SW₁₃ einzustellenden maßgeblichen Schwellwerte α_{grez} und ωₘᵢₙ (als Auslöseschwellwert S_{ω3}) liegen ebenfalls etwas tiefer als die in der Anordnung gemäß Figur 1 verwendeten Werte.

In entsprechender Weise werden auch zur Auswertung der Beschleunigungssignale des Beschleunigungssensors B_{ay} für die Querrichtung und des Beschleunigungssensors B_{az} für die vertikale Richtung jeweils nicht nur ein einziges Tiefpassfilter, sondern jeweils zwei Tiefpassfilter TP_{y1} und TP_{y2} bzw. TP_{z1} und TP_{z2} verwendet. Auch diesen Tiefpassfiltern sind jeweils ein Komparator K_{y1} und K_{y2} bzw. K_{z1} und K_{z2} mit zugehörigen Schwellwerterzeugungsschaltungen SW₂₁ und SW₂₂ bzw. SW₃₁ und SW₃₂ nachgeschaltet, wobei die letzteren Schwellwerte S_{y1} und S_{y2} bzw. S_{z1} und S_{z2} ausgeben.

Die Ausgänge der Komparatoren K_{y1} und K_{y2} sind über getrennte Leitungen auf jeweils einen Eingang der Schwellwerterzeugungsschaltung SW_{ω1} geführt, damit wie bei der Anordnung nach Figur 1 eine dynamische Schwellwertanpassung durchgeführt werden kann, wonach bei instabilen Fahrzustände des Fahrzeuges anzeigende Beschleunigungswerte zur Erniedrigung der Auslöseschwellwerte S_{ω1} führen, also schon bei kleinen ωₓ₋Werten ausgelöst wird.

Die Grenzfrequenzen f_{y1} und f_{y2} der Tiefpassfilter TP_{y1} und TP_{y2} werden so eingestellt, daß das erste Tiefpassfilter TP_{y1} eine hohe Grenzfrequenz f_{y1} und das zweite Tiefpassfilter TP_{y2} eine niedrige Grenzfrequenz f_{y2}. aufweist. Für die von den Schwellwerterzeugungsschaltungen SW₂₁ und SW₂₂ erzeugten Schwellwerte S_{y1} und S_{y2} gilt entsprechendes.

Zur Plausibilisierung der möglicherweise zur Auslösung führenden Drehratensignale ωₓ werden die Ausgänge der Komparatoren K_{y1} und K_{y2} zusätzlich über eine OR-Gatter G₅ auf den zweiten Eingang des AND-Gatters G₂ geführt, so daß nur dann eine Auslösung zugelassen wird, wenn durch entsprechende Einstellung der Schwellwerte S_{y1} und S_{y2} die Querbeschleunigung einen Mindestwert |y| aufweist, wodurch insbesondere Überrollvorgänge im Sandbett oder durch einen Bordsteinanprall veranlaßte Überrollvorgänge erfaßt werden.

Eine Auslösung über ein weiteres OR-Gatter G₄ erfolgt somit nur dann, wenn sowohl das OR-Gatter G₁ ein Auslösesignal weiterleitet als auch wenigstens einer der Komparatoren K_{y1} oder K_{y2} einen High-Pegel erzeugt.

Ebenfalls zur Plausibilisierung der möglicherweise zur Auslösung führenden Drehratensignale ωₓ dienen die ausgewerteten Beschleunigungssignale des Beschleunigungssensors B_{az}, indem die Ausgänge der Komparatoren K_{z1} und K_{z2} über ein OR-Gatter G₆ auf den einen Eingang des AND-Gatters G₃ geführt werden und dessen zweiter Eingang mit dem Ausgang des OR-Gatters G₁ verbunden ist. Zur Erfüllung dieses Zweckes werden die Grenzfrequenzen f_{z1} und f_{z2} der Tiefpassfilter TP_{z1} und TP_{z2} sowie die von den Schwellwerterzeugurigsschaltungen SW₃₁ und SW₃₂ bereitzustellenden Schwellwerte S_{z1} und S_{z2} so eingestellt, daß eine Auslösung nur dann zugelassen wird, wenn die Beschleunigung in senkrechter Richtung von dem Wert 1g (=Erdbeschleunigung) wesentlich abweicht, womit insbesondere Überrollvorgänge vom Typ Schraubrampe (a_{z} größer als 1g), bei dem eine Auslösung bereits in der Aufwärtsbewegung erfolgen soll oder ein Überschlag über eine Klippe, bei dem der a_{z}-Wert näherungsweise Schwerelosigkeit anzeigt, erfaßt werden.

Auch die Grenzfrequenzen f_{Z1} und f_{Z2} der Tiefpassfilter TP_{Z1} und TP_{Z2} werden so eingestellt, daß das erste Tiefpassfilter TP_{z1} eine hohe Grenzfrequenz f_{z1} und das zweite Tiefpassfilter TP_{z2} eine niedrige Grenzfrequenz f_{z2} aufweist. Für die von den Schwellwerterzeugungsschaltungen SW₃₁ und SW₃₂ erzeugten Schwellwerte S_{z1} und S_{z2} gilt entsprechendes.

Schließlich können die bewerteten Beschleunigungssignale a_{z} des Beschleunigungssensors B_{az} - wie auch bei der Anordnung nach Figur 1 realisierbar ist - zur dynamischen Anpassung der Auslöseschwellwerte S_{ω1} verwendet werden, indem die Ausgänge der Komparatoren K_{z1} und K_{z1} über getrennte Leitungen auf separate Eingänge der Schwellwerterzeugungsschaltung SW_{ω1} geführt werden, wie dies in Figur 4 mit gestrichelten Verbindungslinien V dargestellt ist. Damit wird der Auslöseschwellwert S_{ω1} in Abhängigkeit der Ausgangswerte der Komparatoren K_{y1} , K_{y2}, K_{z1} und K_{z2} eingestellt.

Im übrigen sei darauf hingewiesen, daß die Anzahl der verwendeten Tiefpassfilter zur Auswertung der Beschleunigungssignale nicht auf zwei beschränkt bleiben muß. Wird bspw. für die Auswertung der Beschleunigungssignale a_{y} und a_{z} jeweils ein drittes Tiefpassfilter verwendet, so werden deren Grenzfrequenzen derart eingestellt, daß in absteigender Folge das erste Tiefpassfilter die höchste Grenzfrequenz und das dritte Tiefpassfilter die niedrigste Grenzfrequenz aufweist. Für die Schwellwerte gilt enfsprechendes.

## Patentansprüche

1. Verfahren zur Auslösung einer Sicherheitseinrichtung in einem Kraftfahrzeug bei einem Überrollvorgang mittels eines Drehratensensors (B_{ω}), bei dem die von dem Drehratensensor (B_{ω}) erzeugten Drehratensignale (ωₓ) zur Erkennung des Überrollvorganges bewertet werden, und folgende Verfahrensschritte durchgeführt werden:
a) Tiefpassfilterung der Drehratensignale (ωₓ) mittels eines Tiefpassfilters (TP_{ω1}) mit einer Grenzfrequenz (f_{ω1}), bei der die für einen Überrollvorgang charakteristischen Signalanteile des Drehratensignales (ωₓ) dieses Tiefpassfilter (TP_{ω1}) ungefiltert passieren und anschließend einem Schwellwertvergleich mit einem einstellbaren Auslöseschwellwert (S_{ω1}) zugeführt werden,
b) Integration der Drehratensignale (ωₓ) zur Erzeugung eines von der Drehrate des Kraftfahrzeuges abhängigen Integralwertes (∫ωₓdt),
c) Erzeugung des Auslöseschwellwertes (S_{ω1}) in Abhängigkeit des Integralwertes (∫ωₓdt), und
d) Erzeugung eines Auslösesignales zur Auslösung der Sicherheitseinrichtung bei Überschreitung des Auslöseschwellwertes (S_{ω1}) durch das tiefpassgefilterte Drehratensignal.

2. Verfahren nach Anspruch 1, bei dem neben den Drehratensignalen (ωₓ) des Drehratensensors (B_{ω}) Signale (a_{y}, a_{z}) weiterer Sensoren (B_{y}, B_{z}) bearbeitet werden, wobei die weiteren Sensoren (B_{y}, B_{z}) die Stabilität des Kraftfahrzeuges anzeigende fahrzustandsspezifische Parameter, insbesondere Vertikalbeschleunigung (a_{z}), Lateralbeschleunigung (a_{y}) und Neigungswinkel (α) erfassen und in Abhängigkeit wenigstens einer dieser Parameter der Wert des Aüslöseschwellwertes (S_{ω1}) angepaßt wird, indem entsprechend dem von den Signalen der weiteren Sensoren (B_{y}, B_{z}) angezeigten Grad der Stabilität des Kraftfahrzeuges der Auslöseschwellwert (S_{ω1}) herauf- oder herabgesetzt wird.

3. Verfahren nach Anspruch 2, bei dem mittels eines Beschleunigungssensors (B_{y}) die Querbeschleunigung des Kraftfahrzeuges erfaßt wird.

4. Verfahren nach Anspruch 2, bei dem mittels eines Beschleunigungssensors (B_{z}) die Vertikalbeschleunigung des Kraftfahrzeuges erfaßt wird.

5. Verfahren nach einem der vorangehenden Ansprüche, bei, dem
a) eine zweite Tiefpassfilterung der Drehratensignale (ωₓ) mittels eines zweiten Tiefpassfilters (TP_{ω2}) mit einer Grenzfrequenz (f_{ω2}) durchgeführt wird, bei der die für einen langsamen Überrollvorgang charakteristischen Signalanteile des Drehratensignales (ωₓ) ungefiltert das zweite Tiefpassfilter (TP_{ω2}) passieren und anschließend mit einem zweiten Schwellwert (S_{ω2}) verglichen werden, wenn das integrierte Drehratensignal (∫ωₓdt) einen ersten Winkelschwellwert (α_{grenz}) erreicht hat, und
b) die Sicherheitseinrichtung bei Überschreitung des zweiten Schwellwertes (S_{ω2}) durch das tiefpassgefilterte Drehraterisignal ausgelöst wird.

6. Verfahren nach Anspruch 5, bei dem der zweite Schwellwert (S_{ω2})⁻ dem Wert einer Mindestdrehrate (ωₘᵢₙ) entspricht.

7. Verfahren nach Anspruch 5 oder 6, bei dem
a) eine dritte Tiefpassfilterung der Drehratensignale (ωₓ) mittels eines dritten Tiefpassfilters (TP_{ω3}) mit einer Grenzfrequenz (f_{ω3}) durchgeführt wird, dessen zwischen dem Wert der Grenzfrequenz (f_{ω1}) des ersten Tiefpassfilters (TP_{ω1}) und dem Wert der Grenzfrequenz (f_{ω2}) des zweiten Tiefpassfilters (TP_{ω2}) liegt und anschließend mit einem dritten Schwellwert (S_{ω3}) verglichen werden, wenn das integrierte Drehratensignal (∫ωₓdt) einen zweiten Winkelschwellwert (S_{α2}) erreicht hat, und
b) die Sicherheitseinrichtung bei Überschreitung des dritten Schwellwertes (S_{ω3}) durch das tiefpassgefilterte Drehratensignal ausgelöst wird.

8. Verfahren nach Anspruch 7, bei dem der dritte Schwellwert (S_{ω3}) zwischen dem Wert des ersten Schwellwertes (S_{ω1}) und dem Wert des zweiten Schwellwertes (S_{ω2}) liegt.

9. Verfahren nach einem der Ansprüche 2 bis 8, bei dem die mittels des Beschleunigungssensors (B_{y}) erfaßte Lateralbeschleunigung (a_{y}) nach einer Tiefpassfilterung mittels wenigstens einem Tiefpassflter (TP_{y1}) mit einer Plausibilitätsschwelle (S_{y1}, S_{y2}) verglichen wird, wobei nur dann eine Auslösung möglich ist, wenn der Betrag des tiefpassgefilterten Beschleunigungssignals diese Plausibilitätsschwelle (S_{y1}, S_{y2}) überschreitet.

10. Verfahren nach einem der Ansprüche 2 bis 9, bei dem die mittels des Beschleunigungssensors (B_{z}) erfaßte Vertikalbeschleunigung (a_{z}) nach einer Tiefpassfilterung mittels wenigstens einem Tiefpassfilter (TP_{z1}, TP_{z2}) mit dem Beschleunigungswert von 1g verglichen wird, wobei nur dann eine Auslösung möglich ist, wenn das tiefpassgefilterte Beschleunigungssignal wesentlich von diesem Wert abweicht.

## Claims

1. Method for tripping a safety device in a motor vehicle in the event of roll-over by means of a rotation rate sensor (B_{ω}), in which the rotation rate signals (ωₓ) generated by the rotation rate sensor (B_{ω}) are evaluated in order to recognize the roll-over event, and the following procedure steps are carried out:
a) low-pass filtering of the rotation rate signals (ωₓ) by means of a low-pass filter (TP_{ω1}) with a limit frequency (f_{ω1}), in which those signal proportions of the rotation rate signal (ωₓ) which are characteristic of a roll-over event pass through this low-pass filter (TP_{ω1}) unfiltered and are subsequently subjected to a threshold comparison with an adjustable tripping limit (S_{ω1});
b) integration of the rotation rate signals (ωₓ) in order to generate an integral value (∫ωₓdt) that depends on the rotation rate of the motor vehicle;
c) generation of the tripping limit (S_{ω1}) depending on the integral value (∫ωₓdt); and
d) generation of a tripping signal in order to trip the safety device if the tripping limit (S_{ω1}) is exceeded by the low-pass filtered rotation rate signal.

2. Method according to claim 1, in which signals (a_{y}, a_{z}) of further sensors (B_{y}, B_{z}) are processed in addition to the rotation rate signals (ωₓ) of the rotation rate sensor (B_{ω}), wherein the further sensors (B_{y}, B_{z}) detect travel-condition-specific parameters, in particular vertical acceleration (a_{z}), lateral acceleration (a_{y}) and the angle of inclination (α), that indicate the stability of the motor vehicle, and the value of the tripping limit (S_{ω1}) is adapted depending on at least one of these parameters by increasing or reducing the tripping limit (S_{ω1}) corresponding to the degree of motor vehicle stability indicated by the signals of the further sensors (B_{y}, B_{z}).

3. Method according to claim 2, in which the transverse acceleration of the motor vehicle is detected by means of an acceleration sensor (B_{y}).

4. Method according to claim 2, in which the vertical acceleration of the motor vehicle is detected by means of an acceleration sensor (B_{z}).

5. Method according to any one of the preceding claims, in which
a) the rotation rate signals (ωₓ) are low-pass filtered for the second time by means of a second low-pass filter (TP_{ω2}) with a limit frequency (f_{ω2}), in which those signal proportions of the rotation rate signal (ωₓ) which are characteristic of slow roll-over pass through the second low-pass filter (TP_{ω2}) unfiltered and are subsequently compared with a second tripping limit (S_{ω2}) when the integrated rotation rate signal (∫ωₓdt) has reached a first angle threshold (α_{grenz}); and
b) the safety device is tripped if the low-pass filtered rotation rate signal exceeds the second tripping limit (S_{ω2}).

6. Method according to claim 5, in which the second tripping limit (S_{ω2}) corresponds to the value of a minimum rotation rate (ωₘᵢₙ).

7. Method according to claim 5 or 6, in which
a) the rotation rate signals (ωₓ) are low-pass filtered for the third time by means of a third low-pass filter (TP_{ω3}) with a limit frequency (f_{ω3}) whose value lies between the value of the limit frequency (f_{ω1}) of the first low-pass filter (TP_{ω1}) and the value of the limit frequency (f_{ω2}) of the second low-pass filter (TP_{ω2}), and are subsequently compared with a third tripping limit (S_{ω3}) when the integrated rotation rate signal (∫ωₓdt) has reached a second angle threshold (S_{α2}); and
b) the safety device is tripped if the low-pass filtered rotation rate signal exceeds the third tripping limit (S_{ω3}).

8. Method according to claim 7, in which the third tripping limit (S_{ω3}) lies between the value of the first tripping limit (S_{ω1}) and the value of the second tripping limit (S_{ω2}).

9. Method according to any one of claims 2 to 8, in which the lateral acceleration (a_{y}) detected by means of the acceleration sensor (B_{y}) is low-pass filtered by means of at least one low-pass filter (TP_{y1}) and then compared with a plausibility threshold (S_{y1}, S_{y2}), wherein tripping is only possible if the amount of the low-pass filtered acceleration signal exceeds this plausibility threshold (S_{y1}, S_{y2}).

10. Method according to any one of claims 2 to 9, in which the vertical acceleration (a_{z}) detected by means of the acceleration sensor (B_{z}) is low-pass filtered by means of at least one low-pass filter (TP_{z1}, TP_{z2}) and then compared with the acceleration value of 1 g, wherein tripping is only possible if the low-pass filtered acceleration signal substantially deviates from this value.

## Revendications

1. Procédé pour le déclenchement d'un équipement de sécurité sur un véhicule à moteur lors d'un retournement au moyen d'un capteur de taux de rotation (B_{ω}), par lequel les signaux de taux de rotation (ωₓ) générés par le capteur de taux de rotation (B_{ω}) sont évalués pour la reconnaissance du retournement et les étapes de procédé suivantes sont exécutées :
a) filtrage passe-bas des signaux de taux de rotation (ωₓ) au moyen d'un filtre passe-bas (TP_{ω1}) avec une fréquence limite (f_{ω1}) pour laquelle les portions de signal du signal de taux de rotation (ωₓ) caractéristiques d'un retournement passent ce filtre passe-bas (TP_{ω1}) sans être filtrées et sont amenés ensuite à une comparaison de valeur de seuil avec une valeur de seuil de déclenchement (S_{ω1}) réglable,
b) intégration des signaux de taux de rotation (ωₓ) pour la génération d'une valeur intégrale (∫ωₓdt) fonction du taux de rotation du véhicule à moteur,
c) génération de la valeur de seuil de déclenchement (S_{ω1}) en fonction de la valeur intégrale (∫ωₓdt),
d) génération d'un signal de déclenchement pour le déclenchement de l'équipement de sécurité lors du dépassement de la valeur de seuil de déclenchement (S_{ω1}) par le signal de taux de rotation filtré par filtre passe-bas.

2. Procédé selon la revendication 1 pour lequel en plus des signaux de taux de rotation (ωₓ) du capteur de taux de rotation (B_{ω}) des signaux (a_{y}, a_{z}) d'autres capteurs (B_{y}, B_{z}) sont traités, les autres capteurs (B_{y}, B_{z}) enregistrant des paramètres spécifiques à la condition de route indiquant la stabilité du véhicule à moteur; en particulier l'accélération verticale (a_{z}), l'accélération latérale (a_{y}) et l'angle d'inclinaison (α) et la valeur de la valeur de seuil de déclenchement (S_{ω1}) est ajustée en fonction d'au moins un des ces paramètres, en incrémentant ou en décrémentant la valeur de seuil de déclenchement (S_{ω1}) de façon correspondante au degré de stabilité du véhicule à moteur indiqué par les signaux des autres capteurs (B_{y}, B_{z}).

3. Procédé selon la revendication 2 par lequel l'accélération transversale du véhicule à moteur est enregistrée au moyen d'un capteur d'accélération (B_{y}).

4. Procédé selon la revendication 2 par lequel l'accélération verticale du véhicule à moteur est enregistrée au moyen d'un capteur d'accélération (B_{z}).

5. Procédé selon l'une des revendications précédentes, par lequel
a) un deuxième filtrage passe-bas des signaux de taux de rotation (ωₓ) est exécuté au moyen d'un deuxième filtre passe-bas (TP_{ω2}) avec une fréquence limite (f_{ω2}) pour laquelle les portions de signal du signal de taux de rotation (ωₓ) caractéristiques d'un retournement lent passent le deuxième filtre passe-bas (TP_{ω2}) sans être filtrées et sont comparées ensuite avec une deuxième valeur de seuil (S_{ω2}) lorsque le signal de taux de rotation intégré (∫ωₓdt) a atteint une première valeur de seuil angulaire (α_{grenz}) et
b) l'équipement de sécurité est déclenché lors du dépassement de la deuxième valeur de seuil (S_{ω2}) par le signal de taux de rotation filtré par filtre passe-bas.

6. Procédé selon la revendication 5 par lequel la deuxième valeur de seuil (S_{ω2}) correspond à la valeur d'un taux de rotation minimum (ωₘᵢₙ).

7. Procédé selon les revendications 5 ou 6 par lequel
a) un troisième filtrage passe-bas des signaux de taux de rotation (ωₓ) est exécuté au moyen d'un troisième filtre passe-bas (TP_{ω3}) avec une fréquence limite (f_{ω3}) dont la valeur se situe entre la valeur de la fréquence limite (f_{ω1}) du premier filtre passe-bas (TP_{ω1}) et la valeur de la fréquence limite (f_{ω2}) du deuxième filtre passe-bas (TP_{ω2}) et est comparée ensuite avec une troisième valeur de seuil (S_{ω3}) lorsque le signal de taux de rotation intégré (∫ωₓdt) a atteint une deuxième valeur de seuil angulaire (S_{α2}) et
b) l'équipement de sécurité est déclenché lors du dépassement de la troisième valeur de seuil (S_{ω3}) par le signal de taux de rotation filtré par filtre passe-bas.

8. Procédé selon la revendication 7 par lequel la troisième valeur de seuil (S_{ω3}) se situe entre la valeur de la première valeur de seuil (S_{ω1}) et la valeur de la deuxième valeur de seuil (S_{ω2}).

9. Procédé selon l'une des revendications 2 à 8 par lequel l'accélération latérale (a_{y}) enregistrée par le capteur d'accélération (B_{y}) est comparée avec un seuil de plausibilité (S_{y1}, S_{y2}) après un filtrage passe-bas au moyen d'au moins un filtre passe-bas (TP_{y1}), un déclenchement n'étant alors possible que lorsque le montant du signal d'accélération filtré avec un filtre passe-bas dépasse ce seuil de plausibilité (S_{y1}, S_{y2}).

10. Procédé selon l'une des revendications 2 à 9, par lequel l'accélération verticale (a_{y}) enregistrée par le capteur d'accélération (B_{z}) est comparée avec la valeur d'accélération d'1g après un filtrage passe-bas au moyen d'au moins un filtre passe-bas (TP_{z1}, TP_{z2}), un déclenchement n'étant alors possible que lorsque le signal d'accélération filtré par filtre passe-bas diffère fortement de cette valeur.
